**Europäisches Patentamt**

**European Patent Office**

**Office européen des brevets**

(11) Veröffentlichungsnummer: **0 071 128 B2**

(12)

# NEUE EUROPÄISCHE PATENTSCHRIFT

(45) Veröffentlichungstag der neue Patentschrift:
**16.08.95**

(51) Int. Cl.⁶: **C05C 9/02**, C05G 1/00, C05C 9/00

(21) Anmeldenummer: **82106450.8**

(22) Anmeldetag: **17.07.82**

Die Akte enthält technische Angaben, die nach dem Eingang der Anmeldung eingereicht wurden und die nicht in dieser Patentschrift enthalten sind.

(54) **Granuliertes Düngemittel mit gesteuerter Wirkstofffreigabe.**

(30) Priorität: **30.07.81 US 288456**
**30.07.81 US 288457**

(43) Veröffentlichungstag der Anmeldung:
**09.02.83 Patentblatt 83/06**

(45) Bekanntmachung des Hinweises auf die Patenterteilung:
**17.01.90 Patentblatt 90/03**

(45) Bekanntmachung des Hinweises auf die Entsheidung über den Einspruch:
**16.08.95 Patentblatt 95/33**

(84) Benannte Vertragsstaaten:
**AT CH DE FR GB IT LI NL**

(56) Entgegenhaltungen:
**FR-A- 1 570 129        FR-A- 2 308 606
GB-A- 1 036 791        GB-A- 1 036 792
JP-A- 7 118 570        US-A- 3 712 879**

**JOURNAL OF AGRICULTURAL AND FOOD CHEMISTRY, Band 15, Nr. 6, November/Dezember 1967, Seiten 967-971; G.C. KAEMPFFE et al.: "Availability of various fractions of urea-formaldehyde"**

(73) Patentinhaber: **O.M.Scott + Sons Company
14111 Scottslawn Road
Marysville
Ohio 43041 (US)**

(72) Erfinder: **Goertz, Harvey Maurice
13261 Hinton Mill Road
Marysville
Ohio 43040 (US)**

(74) Vertreter: **Gore, Peter Manson et al
W.P. THOMPSON & CO.
Coopers Building
Church Street
Liverpool L1 3AB (GB)**

EP 0 071 128 B2

**Beschreibung**

Die Priorität der Anmeldungen 288 456 und 288 457, jeweils vom 30. Juli 1981 in den Vereinigten Staaten von Amerika wird in Anspruch genommen.

Die Erfindung betrifft ein granuliertes Düngemittel, hergestellt durch Reaktion von Harnstoff und Formaldehyd. Harnstoff-Formaldehyd-Kondensationsprodukte finden eine breite Anwendung als Düngemittel mit langsamer oder geregelter Stickstoffreigabe. Die Kondensationsprodukte enthalten Methylen-Harnstoffpolymere mit unterschiedlicher Kettenlänge. Die höheren Polymere besitzen begrenzte Löslichkeit im Boden und bewirken somit eine verzögerte Stickstoffreigabe. Man nimmt an, daß normalerweise die Stickstoffreigabe durch mikrobischen Abbau erfolgt. In der Literatur, die sich auf derartige Produkte bezieht, wird die Bedeutung von längerkettigen, wasserunlöslichen Polymeren hervorgehoben, die man als Mittel der Wahl für eine langsame Stickstoffreigabe erkannt hat. Die Produkte werden üblicherweise durch die Wasserunlöslichkeit ihrer Stickstoffanteile charakterisiert. Die Normen der Association of American Plant Food Control Officials (AAPFCO) von 1980 verlangen z. B., daß bei einem Düngemittel, das unter der Bezeichnung Harnstoff-Formaldehyd-Düngemittel läuft, mindestens 60 % seines Stickstoffgehaltes in wasserunlöslicher Form vorliegen muß, bei einem Aktivitätsindex von mindestens 40 (Official Publication, AAPFCO, Nr. 33, Rules N-24, N-25, 1980) Der Aktivitätsindex (AI) wird nach der nachstehenden Formel berechnet, wobei CWIN der Anteil an in kaltem Wasser unlöslichen Stickstoff in Prozent und HWIN der Anteil in heißem Wasser in unlöslichen Stickstoff in Prozent bedeuten:

$$AI = \frac{CWIN-HWIN}{CWIN} \cdot 100$$

Die längerkettigen wasserunlöslichen Polymere sind in der Tat ackerbaulich weit weniger aktiv als die kurzkettigen Polymeren. Allgemein gesagt sinkt der Wirkungsgrad bezüglich des Pflanzenwuchses mit steigender Kettenlänge der Methylen-Harnstoff-Polymere. Es ist seit einiger Zeit bekannt, daß ein Teil der in kaltem Wasser unlöslichen Stickstofffraktion CWIN eine sehr geringe Bodendurchsetzungsrate aufweist und bezüglich der praktischen Anwendung bei Pflanzen wenig effizient ist. Dieser ineffiziente Anteil ist der in heißem Wasser unlösliche Stickstoff (HWIN). Demgemäß schränkt die offizielle Definition der AAPFCO den erlaubten Anteil diese HWIN-Fraktion ein. Selbst bei dieser Beschränkung jedoch kann ein wesentlicher Teil des Stickstoffs (36 bis 60 %) dennoch in dieser sehr ineffizienten, heißwasserunlöslichen Form vorliegen. Es wurden Versuche unternommen, die Wirksamkeit des Produktes durch Mischen der Harnstoff-Formaldehyd-Reaktionsprodukte mit löslichen Stickstoffquellen wie Harnstoff zu erhöhen. Dies bewirkt, daß der Anteil an der HWIN-Fraktion zurückgeht, der zugängliche Stickstoffanteil steigt und sorgt dafür, daß die Mischung rasche Abgabeeigenschaften zeigt. Dies trägt jedoch auch wesentlich zum phytotoxischen Verhalten der Mischung bei, z. B. "Verbrennen von Rasen". Es ist noch wichtig anzumerken, daß Harnstoff in weitgehend allen Harnstoff-Formaldehyd-Düngemitteln mit vorhanden ist, was auf unvollständigen oder Gleichgewichtsreaktionen während der Polymerisation beruht. Derartiger nicht zur Reaktion gebrachter Harnstoff hat die gleichen Wirkungen wie absichtlich zugesetzter Harnstoff.

Die Herstellung von Harnstoff-Formaldehyd-Reaktionsprodukten zu Düngemittelzwecken mit langsamer Wirkstofffreigabe erfordert eine erhebliche Erfahrung bei der Einstellung des genauen Polymerisationsgrades, der zur Erreichung der gewünschten Düngeeigenschaften erforderlich ist. Üblicherweise wird zuerst Harnstoff und Formaldehyd bei erhöhten Temperaturen in alkalischer Lösung zu Methylolharnstoff umgesetzt. Das Reaktionsgemisch wird dann angesäuert, was eine rasche Polymerisation des Methylolharnstoffs unter Ausbildung von Methylenharnstoff-Polymeren unterschiedlicher Kettenlänge bewirkt.

In der französischen Offenlegungsschrift FR-A-2 308 606 wird ein gesteuertes Reaktionssystem zur Herstellung von Harnstoff-Formaldehyd-Verbindungen mit langsamer Wirkstofffreigabe bei niedrigem Durchschnittspolymerisationsgrad beschrieben. Das Verfahren enthält die Reaktion von Harnstoff und Formaldehyd in Gegenwart eines sauren Katalysators bei tiefen Temperaturen und ausgedehnter Reaktionszeit. Obgleich die genannte Druckschrift Harnstoff-Formaldehyd-Polymere mit einem etwas niedrigeren Polymerisationsgrad als herkömmliche Düngemittel dieser Zusammensetzung offenbart, nämlich höchstens 1,5, so enthalten diese Verbindungen doch noch große Anteile an langkettigen Polymeren. Außerdem ist das bekannte Verfahren nicht in der Lage, Verbindungen mit einem merklich niedrigeren Polymerisationsgrad herzustellen als die dort beschriebenen.

In der US-PS-3 677 736 wird ein mehrstufiges Verfahren zur Herstellung einer flüssigen Düngemittelsuspension vor Harnstoff-Formaldehyd beschrieben. Das Verfahren beinhaltet die Reaktion von Harnstoff mit Formaldehyd in Gegenwart von Ammoniak gefolgt von einer Ansäuerung. Das Endprodukt ist ein flüssiges Düngemittel das Harnstoff-Formaldehyd enthält mit einem hohen Aktivitätsindex, d.h. es liegt eine geringe Menge an heisswasserunlöslichen Reaktionsprodukt vor.

Da Düngemittel in der Regel mit Streugeräten aufgebracht werden, ist es zweckmässig, sie in granulierter Form herzustellen. Ein derartiges Verfahren wird beispielsweise in der Patentschrift GB-A-1 036 792 beschrieben.

Die japanische Patentanmeldung JP-46-18570 beschreibt ein Verfahren zur Herstellung von Stickstoffdüngemittel durch hinzugeben von Paraformadehyd zu geschmolzenem Harnstoff.

Die vorliegende Erfindung wie sie in den Ansprüchen gekennzeichnet ist, löst die Aufgabe, ein festes Düngemittel mit geregelter Wirkstofffreigabe anzugeben, das einen erhöhten ackerbaulichen Wirkungsgrad bei wesentlich sicherer Anwendung als die löslichen Düngemittel besitzt und ausserdem durch einen erhöhten Anteil an ackerbaulich wesentlich wirksameren kurzkettigen Methylen-Harnstoff-Polymeren ausgezeichnet ist.

Die vorliegende Erfindung ist auf ein granuliertes Düngemittel gerichtet, das eine geregelte Wirkstofffreigabe aufweist und ein Reaktionsprodukt aus einem Reaktionsgemisch von überschüssigem Harnstoff mit Formaldehyd enthält, wobei das genannte Reaktionsprodukt, als Teil des Gesamtgehaltes an Stickstoff, polymer gebundenen Stickstoff in der Form von Methylen-Harnstoff-Polymeren unterschiedlicher Kettenlängen enthält, wobei das genannte granulierte Düngemittel in einer trockenen granulierten Form vorliegt, wobei der Gesamtgehalt des Formaldehyds in dem genannten Reaktionsgemisch vollständig mit dem genannten Harnstoff kondensiert ist, und wenigstens 60 Gew.-% des polymer gebundenen Stickstoffs des genannten granulierten Düngemittels in der Form von in kaltem Wasser löslichen Stickstoffpolymeren vorliegt, wobei die genannten, in kaltem Wasser löslichen Stickstoffpolymere Methylen-Diharnstoff oder Mischungen desselben mit Dimethylen-Triharnstoff sind, wobei der durchschnittliche Polymerisationsgrad von Harnstoff und Formaldehyd größer als 1,5 ist.

Es hat sich gezeigt, dass diese Düngemittel einen Wirkungsgrad besitzen, der wesentlich grösser ist als die der meisten derzeit bekannten Düngemittel mit geregelter Wirkstofffreigabe, ohne dass ein wesentlicher Verlust hinsichtlich Sicherheit oder langsamer Freigabe vorhanden ist. Der ackerbauliche Wirkungsgrad ist dabei als das Verhältnis von durch die Pflanzen aufgenommen Stickstoff zu der gesamten aufgebrachten Stickstoffmenge definiert, gemessen an dem Pflanzenwachstum (Farbe, Frischgewicht usw.).

Im folgenden wird die Erfindung anhand von Ausführungsbeispielen in Verbindung mit den Figuren der Zeichnung näher erläutert. Es zeigt

Fig. 1      das ternäre Diagramm der Wasserlöslichkeit verschiedener Methylen-Harnstoff-Polymere in den Düngemittel nach der Erfindung, da Düngemittel in der Regel mit Streugeräten aufgebracht werden, ist es zweckmäßig, sie in granulierter Form herzustellen. Ein derartiges Verfahren wird beispielsweise in der Patentschrift GB-A-1 036 792 beschrieben.

Fig. 2      das ternäre Diagramm die Verteilung der Harnstoff-Formaldehyd-Reaktionsprodukte und freien Harnstoff in dem Düngemittel nach der Erfindung und

Fig. 3 und 4      den relativen ackerbaulichen Erfolg von kurzkettigen Methylen-Harnstoff-Polymeren im Vergleich zu Harnstoff.

Der Hauptakzent der Erfindung liegt auf den wasserlöslichen kurzkettigen Methylen-Harnstoff-Polymeren des Düngemittels. Die Anwendung hat gezeigt, daß die kurzkettigen Polymere dem Harnstoff in ihrem Wirkungsgrad als Düngemittel gleichen, jedoch im Gegensatz zu diesem ungefährlich sind und naht dazu neigen, durch Auslaugen und Verdampfen an die Umgebung verloren zu gehen. Das angewendete Verfahren zur Charakterisierung der Stickstoff-Polymer-Verteilungen basierte ursprünglich allein auf den Bestimmungen von CWIN und HWIN, Werten, die lediglich die Verteilung der längeren Methylen-Harnstoffketten charakterisieren. Auf der anderen Seite arbeitet die vorliegende Erfindung mit der ganzen Polymerverteilung, eingeschlossen die Methylen-Harnstoff-Polymere, die zu dem kaltwasserlöslichen Stickstoff (Methylen-Diharnstoff und Dimethylen-triharnstoff) dem heißwasserlöslichen Stickstoff und dem in heißem Wasser unlöslichen Stickstoff zu rechnen sind.

Bei dem Düngemittel nach der Erfindung stammt mindestens 50 % des Polymerstickstoffs aus kurzkettigen Methylen-Diharnstoff- und Dimethylen-triharnstoff-Polymeren. Der Rest der Methylen-Harnstoff-Polymere sind höhere wasserunlösliche Polymere mit einem Gehalt von 4 bis 6 Harnstoffmolekülen, eingeschlossen Trimethylentetraharnstoff, Tetramethylenpenta-Harnstoff und Pentamethylen-Hexaharnstoff. Der durchschnittliche Polymerisationsgrad beträgt stets mehr als 1,5. D.h. das Verhältnis von Harnstoff-zu Methylengruppen in den Polymeren liegt durchschnittlich über 1,5. Zusätzlich zu den Methylen-Harnstoff-Polymeren enthalten die Düngemittel üblicherweise Stickstoff, der aus anderen Quellen stammt, vorzugsweise aus Harnstoff selbst. Der Harnstoff liegt in einer Menge bis zu 70 Gew.% vor, für gewöhnlich sind es

3

mehr als 10 %. Die bevorzugten Düngemittel nach der Erfindung enthalten sowohl Harnstoff wie Methylen-Harnstoff-Polymere, so daß mindestens 45 % des Stickstoffs aus kaltwasserlöslichen Reaktionsprodukten besteht, wenn der Anteil an CWIN zwischen 15 und 35 %, bezogen auf Stickstoff, beträgt und mehr als 35 % des Stickstoffs bestehen aus kaltwasserlöslichen Reaktionsprodukten, wenn die Menge CWIN unter 15 % liegt. Vorzugsweise bestehen weniger als 20 Gew.-% aus CWIN. (sämtliche Werte von CWIN und HWIN werden nach den Official Methods of Analysis of the Association of Official Analytical Chemis 13 Addition 1980 Procedure 2.9 bestimmt).

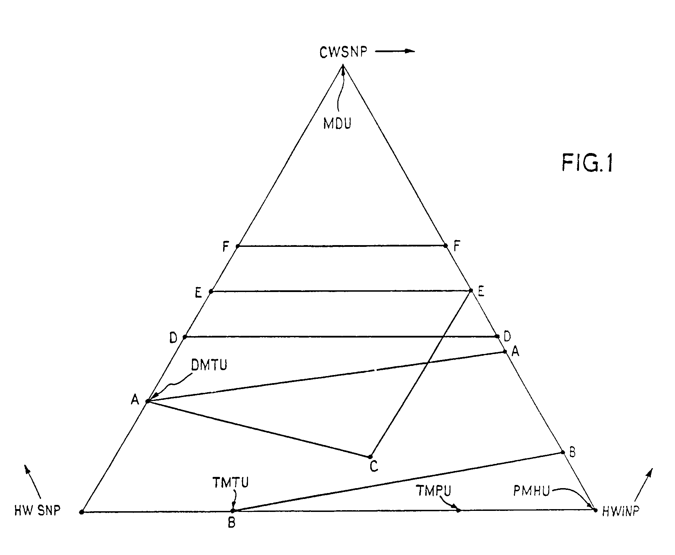

Fig. 1 zeigt nur das ternäre Diagramm mit der Löslichkeitsverteilung von Methylen-Harnstoff-Polymeren, d.h. kaltwasserlöslichen Stickstoffpolymeren (CWSNP), heißwasserlöslichen Stickstoffpolymeren (HWSNP) und heißwasserunlöslichen Stickstoffpolymeren (HWINP). Jede dieser Fraktionen bildet eine Spitze in dem Diagramm. Das ternäre Diagramm enthält so alle möglichen Verteilungsgrade von Methylen-Harnstoff-Polymeren unterschiedlichen Polymerisationsgrades.

Es gibt bislang keine analytische Technik die alle Polymerkettenlängen speziell identifiziert. Es wurden jedoch vor kurzem Hochdruck-Flüssigkeitskomatographieverfahren entwickelt zur Identifizierung und mengenmäßigen Erfassung von Methylen-Diharnstoff (MDU) und Dimethylen-triharnstoff (DMTU) in wässriger Lösung. Die übriggebliebenen langkettigen Polymere werden durch herkömmliche Löslichkeitsbestimmungen in kaltem und heißem Wasser charakterisiert. MDU mit einem Polymerisationsgrad von 2 ist vollständig in kaltem Wasser löslich und erscheint deshalb ganz an der Spitze im Diagramm. DMTU mit einem Polymerisationsgrad von 1,5 ist zu 25 % in kaltem Wasser löslich, zu 75 % in heißem Wasser und erscheint somit als Punkt auf der linken Flanke im Diagramm. Obgleich die höheren Methylen-Harnstoff-Polymere nicht isoliert wurden kann man ihre Löslichkeit interpolieren. Die Lage der folgenden Polymere ist ebenfalls eingezeichnet:

TMTU (Polymerisationsgrad 1,33)-Trimethylen-Tetraharnstoff

TMPU (Polymerisationsgrad 1,25)-Tetramethylen-Pentaharnstoff

PMHU (Polymerisationsgrad 1,20)-Pentamethylen-Hexaharnstoff

PMHU und höhere Polymere (Polymerisationsgrad ≤ 1,20) werden als vollständig unlöslich in heißem Wasser angesehen.

Basierende auf der Annahme, daß die Löslichkeiten von Polymermischungen bezüglich der Verhältnisse der verschiedenen vorliegenden Polymere linear sind, kann der Löslichkeitsbereich für einen durchschnittlichen Polymerisationsgrad definiert werden. So definieren die Linien A - A und B - B in (Fig. 1 einen Durchschnittspolymerisationsgrad von 1,5 bzw. 1,33. Polymermischungen mit einem durchschnittlichen Polymerisationsgrad kleiner als 1,33 liegen dann im Löslichkeitsbereich unter der Linie B - B. Mischungen mit einem durchschnittlichen Polymerisationsgrad größer als 1,5 liegen dagegen in dem Löslichkeitsbereich oberhalb der Linie A - A. Mischungen, deren durchschnittlicher Polymerisationsgrad sich zwischen diesen beiden Werten bewegt, liegen in dem Zwischenraum zwischen den beiden Linien.

Bei den vorliegenden Düngemitteln stammen mehr als 50 % des Stickstoff aus kurzkettigen Polymeren. Dieser Bereich ist durch die Linie A - C - E in Fig. 1 begrenzt. Punkt C ist der Mittelpunkt einer Verbindungslinie von Punkt A (100 % DMTU) und der HWINP-Spitze (100 % langkettige Polymere). Der Punkt E ist in ähnlicher Weise der Mittelpunkt einer Linie die 100 % MDU und ebenfalls die HWINP-Spitze verbindet. Alle Düngemittel unterhalb oder rechts der Linie A - C - E liegen somit außerhalb des Erfindungsbereiches. Die vorliegenden Düngemittel enthalten weniger als 60 % ihres polymergebundenen Stickstoffes in wasserunlöslicher Form - oder umgekehrt über 40 % in im kaltem Wasser löslicher Form. Dieser Bereich ist durch die Linie D - D definiert. Die Düngemittel nach der Erfindung enthalten vorzugsweise Stickstoffanteile, die in den Bereich des ternären Diagramms links der Linie C - E und oberhalb der Linie D - D fallen. In einer speziellen Form enthalten die Düngemittel über 50 % des Stickstoffs in Form von in kaltem Wasser löslichen Polymeren. Dies wird durch den Bereich oberhalb der Linie E - E dargestellt. In einer weiteren Form erhalten die Düngemittel über 60 % ihres Stickstoffs in Form von in kaltem Wasser löslichen Polymeren, dieser Bereich liegt oberhalb der Linie F - F in Fig. 1. Der Prozentgehalt an Stickstoff in kaltwasserlöslicher Form wird durch das Gewichtsverhältnis von Stickstoff aus MDU und DMTU, bezogen auf den Gesamtstickstoffgehalt, bestimmt. Der Gesamtgehalt an Stickstoff setzt sich zusammen aus dem Stickstoff, gebunden als CWIN plus Stickstoff aus MDU und DMTU. Ersterer wird gemäß den AOAC-Verfahren analysiert, der Stickstoff aus den beiden letzten Quellen wird durch Flüssig-Chromatographie der in kaltem Wasser löslichen Fraktion bestimmt.

In der Tat enthalten käufliche Harnstoff-Formaldehyd-Verbindungen unterschiedliche Anteile an Stickstoff. Um die Düngemittel nach der vorliegenden Erfindung mit bekannten Harnstoff-Formaldehyd-Düngemitteln zu vergleichen wurde ein zweites ternäres Diagramm aufgestellt, in dem HWSN und HWIN (der in kaltem Wasser unlösliche Stickstoff) zu einer Komponente vereinigt ist, nämlich CWIN. CWSN ist die zweite Komponente und der aus Harnstoff stammende Stickstoff die dritte Komponente. (CWSN ist kaltwasserun-

4

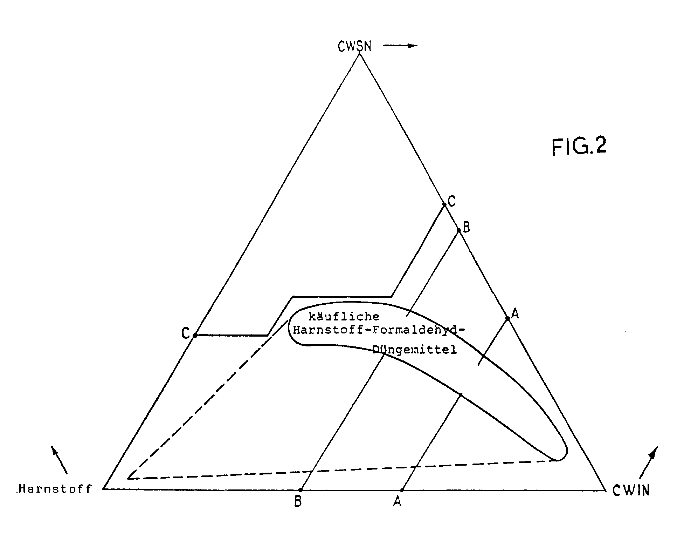

löslicher Stickstoff, ausgenommen Harnstoff). Die drei Eckpunkte in Fig. 2 stellen somit CWSN, Harnstoff und CWIN dar. Da die vorliegende Erfindung auf kurzkettige Polymere zielt, die in der CWSN-Fraktion enthalten sind, eignet sah das Diagramm nach Fig. 2 auch zur Erläuterung der Erfindung und ihre Relation zu dem Stand der Technik. Wie das Diagramm zeigt, liegen alle Düngemittel auf Harnstoffbasis auf der rechten Seite der gestrichelten Linie A - A, 60 % CWIN darstellend, da wie oben schon gesagt, Harnstoff 60 % oder mehr CWIN enthält. Die oben genannte US-PS-4 089 899 offenbart ein Produkt, daß "ca. 40 % in kaltem Wasser unlöslichen Stickstoff enthält". Düngemittel nach diesem Patent würden deshalb innerhalb eines schmalen Bandes liegen, daß zumindestens einen Teil der Linie B - B in dem Diagramm nach Fig. 2 umgibt. Die Hauptmasse der gegenwärtig käuflichen Düngemittel auf Harnstoff-Formaldehydbasis, werden durch den unregelmäßig geformten Bereich in Fig. 2 abgegrenzt. Werden die käuflichen Düngemittel auf Harnstoff-Formaldehyd-Basis mit unterschiedlichen Mengen von Harnstoff vermischt, so wurden sie weitgehend in den dreieckigen Bereich innerhalb der gestrichelten Linien fallen. Die Düngemittel nach der vorliegenden Erfindung liegen oberhalb der Linie C - C in Fig. 2. Die Linie C - C begrenzt den Bereich des Diagramms, der mehr als 45 % CWSN enthält, wobei die Menge an CWIN zwischen 15 und 35 beträgt und mehr als 35 % CWSN vorliegt, sofern die Menge an CWIN unter 15 % liegt.

Die Methylen-Harnstoff-Verbindungen nach der Erfindung mit vornehmlich niedrigem Polymergehalt können nicht durch herkömmliche Harnstoff-Formaldehyd-Kondensationsverfahren hergestellt werden. Dies geschieht vielmehr in einer zweistufigen Kondensationsreaktion, wobei Ammoniak in der ersten Stufe Verwendung findet. Das Verfahren umfaßt die Herstellung einer wässrigen Mischung aus Harnstoff, Formaldehyd und Ammoniak, wobei das Molverhältnis von Harnstoff zu Formaldehyd von 1:1 bis 3:1 und das von Ammoniak zu Formaldehyd von 0,5:1 bis 1,00 reicht. Die Mischung wird auf eine Temperatur von 60 bis 88°C erhitzt, sie ist dabei alkalisch, und das Aufheizen wird vor der Bildung einer merklichen Menge an Methylen-Harnstoff-Polymer abgebrochen. Die Reaktion erzeugt eine Mischung aus Methylol-Harnstoff und einem unbekannten Zwischenprodukt. Mit 0,1 bis 8 Gew.-% einer Säure, bezogen auf das Reaktionsgemisch, wird dieses zur Einleitung der Polymerisation angesäuert und anschließend solange auf 82 bis 160°C erhitzt, bis die Polymerisation fertig und das Reaktionsprodukt getrocknet ist. Der Hauptanteil des in Polymerform vorliegenden Stickstoffs besteht aus kurzkettigen Methylen-Harnstoff-Polymeren, und zwar aus Methylen-Diharnstoff, und Mischungen desselben mit Dimethylen-triharnstoff.

Bei einer bevorzugten Ausbildungsform beträgt das Molverhältnis von Harnstoff zu Formaldehyd 1,2 bis 2,5 und das von Ammoniak zu Formaldehyd 0,1 bis 0,75. Die Mischung der Komponenten Harnstoff, Formaldehyd und Ammoniak wird vorzugsweise auf eine Temperatur zwischen 75 und 85° erhitzt und der Wassergehalt der Reaktionsmischung unter 15 Gew.-% gehalten. Das Aufheizen wird nur solange durchgeführt, bis sichergestellt ist, daß der Harnstoff vollständig gelöst ist, der Ammoniak reagiert hat und die Bildung von merklichen Mengen an Methylen-Harnstoff-Polymeren vermieden wurde. Dieser Zeitraum beträgt weniger als 45 Minuten. Um die Bildung von merklichen Anteilen von langkettigen Methylen-Harnstoff-Polymeren in der zweiten Phase der Reaktion zu vermeiden, wird die Säure in verhältnismäßig geringen Mengen von 0,5 bis 3 Gew.-% zugefügt.

Bei der ersten Verfahrensstufe findet die Reaktion von Harnstoff und Formaldehyd in Gegenwart von Ammoniak unter Ausbildung von Methylen-Harnstoffen und einer Ammoniakzwischenverbindung statt. Obgleich die genaue Zusammensetzung der letzteren unbekannt ist, kann sie als entscheidend für die Ausbildung von kurzkettigen Methylen-Harnstoffen angesehen werden, deren Herstellung das Hauptziel des vorliegenden Verfahrens ist. Flüssigchromatographie-Untersuchungen zeigen, daß die Ammoniakzwischenstufe in ihrer Struktur ähnlich aber nicht identisch ist mit Hexamethylen-Tetramin. Während der zweiten Verfahrensstufe, in der die Reaktionsmischung zur Ingangsetzung der Methylen-Harnstoff-Polymerisation angesäuert wird, scheint die Ammoniakzwischenstufe die Reaktionsgeschwindigkeit zu steuern, was zu einem höheren Anteil an kurzkettigen Polymeren führt. Das Verfahren kann entweder chargenweise oder kontinuierlich durchgezogen werden.

In der ersten Verfahrensstufe kann neben freiem Harnstoff und Formaldehyd auch als Harnstoff- und Formaldehydquelle ein käufliches wässriges Harnstoff-Formaldehyd-Konzentrat eingesetzt werden. Ein derartiges Konzentrat ist unter der Bezeichnung UFC-85® bekannt und stellt eine Vorkondensierte Lösung von Formaldehyd und Harnstoff mit merklichen Mengen an freiem Formaldehyd und Dimethylol-Harnstoff dar. Wird ein Konzentrat verwendet, sollte fester Harnstoff zusätzlich dem Reaktionsgemisch zugefügt werden, um das Molverhältnis von Harnstoff zu Formaldehyd auf 1:1 bis 3:1, vorzugsweise auf 1,2:1 bis 2,5:1 zu bringen. Den Harnstoff kann man in fester Form oder als Lösung zusetzen. Weitere Quellen von Formaldehyd sind gasförmiger Formaldehyd und Paraformaldehyd. Harnstoff und Formaldehyd werden zusammen in einen Tank gegeben und Wärme und Wasser zur vollständigen Lösung zugefügt. Der Wasseranteil sollte auf weniger als 15 % der flüssigen Mischung beschränkt sein. Größere Mengen beeinflussen die Reaktivität der Mischung und die Fähigkeit zur Erzeugung eines trockenen granulierten

EP 0 071 128 B2

Produktes. Der Harnstoff-Formaldehyd-Wassermischung wird dann Ammoniak zugefügt. In welcher Form dies geschieht, ist unkritisch, gasförmiger Ammoniak ist allerdings der billigste. Die Menge an Ammoniak ist jedoch im Hinblick auf das Endprodukt von Bedeutung, da er das Zwischenprodukt bildet, daß letztlich den Polymerisationsgrad steuert. Das Molverhältnis von Ammoniak zu Formaldehyd kann zwischen 05, und 1,00 schwanken, der letztere Wert ist ein geringer Überschuß über die stöchiometrische Grenze der Formaldehydmenge, die mit Ammoniak reagiert. Üblicherweise variiert das Molverhältnis von Ammoniak zu Formaldehyd zwischen 0,10 und 0,75. Die Zugabe von Ammoniak kann gleichzeitig mit den anderen Komponenten erfolgen, sofern hinreichend Zeit ist, den Ammoniak in der flüssigen Reaktionsmischung "einzufangen". Die Anwesenheit von Ammoniak sorgt für den basischen pH-Wert, der zur Vermeidung der Bildung von wesentlichen Mengen an Methylen-Harnstoff erforderlich ist. Die gesamte Reaktion in der Phase 1 wird bei ein und demselben pH-Wert ausgeführt.

Die Temperatur der ersten Reaktionsstufe sollte zwischen 60 und 88 °C liegen, vorzugsweise zwischen 74 und 85 °C. Die Bildung der reaktiven Zwischenstufe aus Ammoniak und Formaldehyd ist stark exotherm und unterstützt die Auflösung des Harnstoffs, da dadurch die Zufuhr von Wärme von außen verringert wird. Die Lösung sollte oberhalb der "Aussalztemperatur" des Harnstoffs gehaften werden, bis eine klare Lösung erzielt ist. Die Gesamtaufheizzeit für die erste Stufe liegt zwischen 5 und 45 Minuten, normalerweise zwischen 20 und 40 Minuten. Zu diesem Zeitpunkt besteht die Reaktionslösung weitgehend aus Methylol-Harnstoffen und der Ammoniakzwischenverbindung, eine merkliche Methylen-Harnstoff-Polymerisation hat noch nicht stattgefunden. Das Aufheizen sollte nur solang vorgenommen werden, bis die Auflösung des Harnstoffs und die Bildung der unbekannten Ammoniak-Zwischenverbindung sichergestellt ist.

Die Düngemittel nach der Erfindung können entweder mit oder ohne einem innerten Träger verwendet werden. Bei der praktischen Anwendung ist die Verwendung eines Trägers sinnvoll, da durch das Fehlen von langkettigen Polymeren es schwierig ist, den Grundkörper für ein granuliertes Produkt auszubilden. Das Düngemittel kann auch Phosphor- oder Kaliumquellen (z. B. P205 oder K20) im sekundären oder Mikronährstoffen zur Erzeugung eines "vollständigen Düngemittels" und nicht nur eines Stickstoffdüngers enthalten. Ein besonders geeigneter Träger ist poröser Vermikulit, wie er in der DE-AS-1 592 751.2 beschrieben wird. Wird ein poröser Träger verwendet, so sprüht man den Methylol-Harnstoff zusammen mit dem unbekannten Zwischenprodukt aus der ersten Verfahrensstufe in flüssiger Form auf den Träger, der mit Phosphor- und Kaliumnährstofflieferanten wie Monoammonium-Phosphat, Kaliumsulfat oder Kaliumchlorid vermischt wurde. Zusätzlich können auch andere Salze wie Ammonsulfat und Eisensulfat zugesetzt werden. Der Träger sollte in einer solchen Menge verwendet werden, daß er 10 bis 50 Gew.-%, vorzugsweise 20 bis 35 Gew.-% des Gesamtgewichts an Düngemittel darstellt. Träger und Düngemittel werden dann angesäuert, z. B. durch Besprühen mit Schwefelsäure oder Phosphorsäure, um die reaktiven Zwischenstufen unter Ausbildung von Methylen-Harnstoff-Polymeren zu kondensieren. Das granulierte oder teilchenförmige Produkt, das den Dünger in den Poren des Trägers enthält, wird dann zur Erzielung der Endkondensation aushärten und zuletzt trocknen gelassen. Eine Anzahl von innerten absorbierenden Trägern kann verwendet werden. Voluminöser Vermikulit ist aufgrund seiner hohen Absorbtionsfähigkeit besonders geeignet. Der inerte Träger kann mit oder ohne Zusatz anderer Düngematerialien wie P205 oder K20 bzw. anderen Elementen verwendet werden. Hierbei kann neben den oben erwähnten Verbindungen auch Kaliumnitrat oder Kaliumphosphat verwendet werden. 0 bis 60 Gew.-% Kalium, berechnet als K20 und 0 bis 60 % Phosphor, berechnet als P205 je 1000 Gewichtsteile einer Reaktionsmischung aus Harnstoff und Formaldehyd können zugesetzt werden. Weitere Düngestoffe oder Spurenelemente können zu diesem Zeitpunkt ebenfalls zugesetzt werden, wie z. B. Substanzen wie Eisen, Mangan, Bor, Molybdän, Magnesium, Kupfer, Zink, Jod, Calcium und Schwefel; diese Elemente können entweder als solche oder in Form ihre Salze oder Chelate zugesetzt werden.

Wie in der genannten deutschen Auslegeschrift ausgeführt, wird die Säure auf die Mischung aufgesprüht, um die Methylen-Harnstoff-Polymerisationsreaktion in Gang zu setzen. Die Säuremenge ist im Hinblick auf den Polymerisationsgrad kritisch und sollte zwischen 0,1 und 8 Gew.-%, bezogen auf das Reaktionsgemisch, vorzugsweise, 0,5 bis 3 Gew.-% betragen. Wird ein Träger verwendet, sollte der Säurezusatz unter 4 % gehalten werden, um die Bildung von höheren Methylen-Harnstoff-Polymeren zu vermeiden. Ein höherer Säurepegel würde zu einer erheblichen Bildung von Methylen-Harnstoffen führen. Temperatur, die nicht von außen kommt, ist an dieser Stelle erforderlich. Für gewöhnlich nimmt man Schwefelsäure, obgleich andere Säuren wie Phosphorsäure ebenfalls angewendet werden können.

Sobald die Kondensationsreaktion in Gang gesetzt ist, wird die feuchte Mischung in einen Trockenreaktor übergeführt, wo die Kondensation weiterläuft, während das Produkt gleichzeitig getrocknet und damit in einen fließfähigen Zustand gebracht wird. Eine Einstellung des pH-Wertes oder eine Neutralisation ist nicht erforderlich.

6

Die Trockenzeit wurde ebenfalls als kritisch für den Harnstoff-Polymerisationsgrad befunden. Der bevorzugte Temperaturbereich liegt dabei zwischen 104 und 160°C, wobei die Verweilzeit 15 bis 35 Minuten beträgt. Die Beziehung Zeit-Temperatur ist natürlich eine Funktion der zu trocknenden Materialmenge, der gewünschten Endfeuchtigkeit und des gewünschten Harnstoff-Polymerisations-Grades. Eine Reihe von technischen Trockenanlagen sind für den gewünschten Zweck geeignet, eingeschlossen Bandtrocknung, Bödentrocknung, Drehrosttrocknung, usw. Beim Trocknen des Materials, insbesondere bei erhöhten Temperaturen, kann Ammoniak mit dem Abgas mitgerissen werden. Dieses kann in die Lösungsphase des Verfahrens zurückgeführt werden, so daß ein geschlossenes System besteht. Nach dem Trocknen wird der Dünger gesiebt und ist zur Verwendung fertig. Er kann auch als Träger für verschiedene aktive Bestandteile, eingeschlossen Herbizide, Fungizide und Insektizide oder weitere Pflanzennährstoffe verwendet werden, man kann ihn auch als Grundstock für Prozesse zum Verändern der physikalischen Eigenschaften einsetzen, wie in der US-PS-4 025 329 beschrieben ist.

Eine andere Möglichkeit besteht in der Verwendung des Düngers selbst ohne Verwendung eines Trägers. Das Verfahren zur Herstellung derartiger Harnstoff-Formaldehyd-Düngemittel ist in der DE-PS-2 039 759 beschrieben. Düngemittel ohne Träger entsprechend der vorliegenden Erfindung werden im wesentlichen nach den Darlegungen in dem obigen Absatz hergestellt, abgesehen davon, daß die Säure in die flüssige Suspension zur Ingangsetzung der Stufe 2 der Kondensationsreaktion zugegeben wird und nicht die Methylol-Harnstoff-Zwischenlösung auf den Träger gesprüht wird. Das Reaktionsgemisch, nun in flüssiger oder halbflüssiger Form, wird dann zur Entfernung des Wassers und Vollendung der Kondensation in einen Trockner übergeführt, um einen granulierten Dünger herzustellen. Der Trockenvorgang und die Vollendung der Kondensation wird gemäß dem in der letztgenannten DE-Patentschrift offenbarten Verfahren vorgenommen. Wie dort gezeigt, wird die angesäuerte Mischung auf eine Schicht aufgesprüht, die charakteristischer Weise eine Anfangsdicke im Durchschnitt von 15 cm aufweist. Dies läßt sich dadurch erzielen, daß die Methylen-Harnstoffreaktion durch rasches Aufbringen des Flüssigkeitsstromes auf eine Fördereinrichtung zum Aushärten aufgebracht wird, auf dem die Reaktionsmischung in einen halbfesten Zustand koaguliert. Das Aushärten wird auf der Förderanlage fortgesetzt, wobei mindestens eine Minute lang zwischen 82 und 104°C das Produkt auf der Förderanlage aushärten gelassen wird zur Erzeugung eines physikalisch stabilen Materials, das leicht gehandhabt werden kann. Die immer noch feuchte Mischung wird in einen Trockenreaktor übergeführt, wo die Kondensation stattfindet, während gleichzeitig das Produkt getrocknet und damit in einen fließfähigen Zustand übergeführt wird. Die Trockentemperatur hat sich als kritisch für den Harnstoff-Polymerisationsgrad erwiesen, wenn kein Träger verwendet wird. Der bevorzugte Bereich der Trockentemperatur liegt zwischen 104 und 160°C, die entsprechenden Zeiten liegen zwischen 15 und 35 Minuten. Eine Reihe von Trockenvorrichtungen können ebenso wie bei der Anwendung eines Trägers eingesetzt werden.

Eine dritte Form des granulierten Düngemittels läßt sich durch Aufschlämmen eines innerten Trägers mit dem Harz (Methylol-Harnstoff) und Zwischenprodukt vor dem Ansäuern herstellen. Der innerte Träger kann z. B. Sägemehl, Gips, gemahlene Kaffeeschalen, Ton oder ein anderer bekannter inerter Träger in gekörnter Form sein. Die Art und Menge der innerten Substanz wird lediglich durch die Viskosität der Steifigkeit der Aufschlämmung und seine Wirkung auf die Reaktivität des Harzes begrenzt. Nach dem Ansäuern findet die Kondensationsreaktion an und um die inerten Teilchen herum statt, die als Kondensationskeime wirken. Ob mit oder ohne Träger, die Düngemittel enthalten üblicherweise 20 bis 41 Gew.-% an Stickstoff.

Die folgenden Beispiele dienen zur Erläuterung der Erfindung, alle Angaben in Teilen oder Prozenten beziehen sich auf das Gewicht, sofern nicht anders angegeben.

**Beispiel 1**

Harnstoff, Harnstoff-Formaldehydkonzentrat (UFC-85®), wasserfreier Ammoniak und Wasser wurden in ein Rührgefäß eingespeist und zwar jeweils 2605, 1024, 233 und 253g/Minute. (UFC-85® ist eine vorkondensierte Lösung von Formaldehyd und Harnstoff, die wesentliche Mengen an freiem Formaldehyd und Dimethylol-Harnstoff enthält). Die Verweilzeit in dem Tank betrug 45 Minuten, während dieser Zeit wurde die Lösung bei einem pH-Wert von 10,1 auf 82°C gehalten. Die Lösung wurde dann in einen Mixer eingesprüht, in dem kontinuierlich Vermikulit, fein gemahlenes Ammoniumphosphat und fein gemahlenes Kaliumchlorid in Mengen von 1245, 326 und 290g/Minute eingespeist wurden. 50 %-ige Schwefelsäure wurde in einer Menge von 303g/Minute auf die Mischung gesprüht, um die Reaktionskondensation in Gang zu bringen. Das Reaktionsgemisch wurde dann 20 Minuten bei 150°C einen Bandtrockner passieren gelassen.

Der resultierende Feststoff mit einer Feuchtigkeit von 2 % wurde auf eine Korngröße von mehr als 2 mm gemahlen. Das Produkt besaß die in Tabelle 1 aufgeführten Düngeeigenschaften.

**Beispiele 2 bis 4**

Diese Beispiele zeigen, wie die Verteilung Stickstoffs in Polymer durch entsprechende Wahl der Reaktionsbedingungen geändert werden kann. Der Prozeßablauf ist im wesentlichen der gleiche wie im Beispiel 1.

| Material: | Strömungsrat (g/Minute) | | |
|---|---|---|---|
| | Beispiel | 2 Beispiel | 3 Beispiel 4 |
| Harnstoff | 2202 | 2487 | 2487 |
| UFC | 1672 | 1246 | 1672 |
| Ammoniak | 326 | 186 | 186 |
| Wasser | 217 | 276 | 263 |
| Vermikulit | 1399 | 1308 | 1395 |
| Monoammoniumphosphat | 308 | 308 | 308 |
| Kaliumchlorid | 280 | 290 | 294 |
| Schwefelsäure (50 %) | 217 | 190 | 190 |
| Lösungstemperatur (°C) | 75,5 | 76 | 77,2 |
| Trockentemperatur (°C) | 149 | 143 | 160 |

Dieses Verfahren ergibt Produkte, welche die In Tabelle I gezeigten Eigenschaften aufweisen.

Beispiele 5 und 6: Diese Beispiele zeigen die Herstellung ohne Träger.

Die Harzherstellung, (Methylol-Harnstoffe und Ammoniakzwischenprodukt) für jedes der Produkte war gleich und lief wie folgt ab:

a) Harnstoff, UFC und $NH_4OH$ wurden in ein Becherglas gegeben und sofort aufgeheizt. Der Harnstoff löste sich dabei in weniger als acht Minuten vollständig auf.

b) Das Hart wurde auf 77°C aufgeheizt und 30 Minuten lang bei dieser Temperatur gehalten.

c) Der pH-Wert des Hartes wurde im allgemeinen zwischen 9 und 11 ohne Zugabe von Alkali während des Aufheizzyklus gehalten.

d) Das Harz wurde mit 50 %-iger Schwefelsäure nach 30 Minuten aufheizen angesäuert. Die Ansatzvariablen lauteten wie folgt:

| Beispiel | (Harnstoff/UFC) Gewicht | ($NH_4OH$/UFC) Gewicht | Säure % Gesamtharz Gewicht |
|---|---|---|---|
| 5 | 1,9 | 0,40 | 8,0 |
| 6 | 1,9 | 0,40 | 16,0 |

e) Nach der Reaktion wurden die Proben in einer dünnen Schicht auf Blechen zum Trocknen ausgebreitet. Die Produkte blieben 48 bis 72 Stunden lang bei 65°C auf 40 bis 50 % relativer Feuchtigkeit in einer dafür vorgesehenen Kammer, in der Temperatur und Feuchtigkeit konstant gehalten werden. Das Material wurde granuliert und besaß die in Tabelle 1 gezeigten Eigenschaften. Die Beispiele 5 und 6 waren trockene, granulierte Feststoffe. Die Tabellen II und III zeigen die Leistung der Materialien der Beispiele 1 bis 4 auf dem landwirtschaftlichen Sektor. Tabelle II zeigt die Reaktion und die Abweichungen der Beispiel 1 bis 4 verglichen mit entsprechenden Mengen von Stickstoff als Harnstoff, einem käuflichen Düngemittel mit gesteuerter Stickstofffreigabe und einer Blindprobe, die keinen Dünger enthält. Man erkennt leicht, daß die Substanzen, die reich an kurzkettigen Methylen-Harnstoffen sind, die gewünschten Reaktionseigenschaften besitzen, (sowohl zu Beginn wie auch noch am Ende), wie auch ferner eine verbesserte Sicherheit gegenüber Harnstoff.

Tabelle III zeigt den verbesserten Stickstoffwirkungsgrad von kurzkettigen Methylen-Harnstoffprodukten. Die Produkte nach dem Beispiel 1 bis 4 wurden im Vergleich zu einem Material, dessen gesteuerte Freigabe man gelten lassen kann und daß in einer Menge von 408 g Stickstoff pro Minute aufgebracht wurde. Anstelle einer Verringerung von 17 bis 22 % ergaben die Produkte sowohl zu Beginn wie danach Reaktionseigenschaften, die dem des Standards entsprechen, obgleich dieser in einer höheren Rate aufgebracht wurde. Die Ergebnisse wurden an verschiedenen Bodenarten bestätigt.

Tabelle I

| Nährstoffeigenschaften der Produkte | | | | | | | | | |
|---|---|---|---|---|---|---|---|---|---|
| Beispiel | N | P% | K | Stickstoffverteilung | | | Polymerstickstoffverteilung | | |
| | | | | Harnstoff | CWSN% | CWIN | CWSNP | HWSNP% | HWINP |
| 1 | 26,08 | 3,18 | 3,20 | 33,9 | 50,4 | 15,7 | 71,4 | 16,7 | 11,9 |
| 2 | 25,04 | 3,48 | 3,28 | 24,6 | 58,6 | 16,8 | 62,8 | 19,9 | 17,3 |
| 3 | 25,99 | 3,39 | 2,67 | 34,2 | 53,7 | 12,1 | 75,9 | 14,1 | 10,0 |
| 4 | 25,65 | 3,36 | 3,10 | 28,4 | 49,7 | 21,9 | 61,2 | 15,0 | 23,8 |
| 5 | 38,29 | 0,0 | 0,0 | 24,6 | 63,6 | 11,8 | 80.2 | 16,0 | 3,8 |
| 6 | 38,09 | 0,0 | 0,0 | 13,2 | 60,2 | 26,7 | 60,9 | 16,5 | 22,6 |

**Tabelle II**

Vergleich von Beschädigungen und Reaktionseigenschaften von Produkten mit gleichen Stickstoffmengen

| | Beschädigung, Entfärbung bei (8x)* (10 1) | Anfangsreaktion Farbe (1x)* (10 1) | | Restreaktion Farbe (1x)* (10 1) | |
|---|---|---|---|---|---|
| Grasart | Bentgras-feucht | Blaugras | | Blaugras | |
| Bodenart | Lehm | Lehm | | Lehm | |
| Testnummer | 1 | 2 | 3 | 2 | 3 |
| Ablesetag (Tag nach der Aufbringung | 6 | 8 | 7 | 36 | 49 |
| | (1x)* | | | | |
| Beispiele | N Rate | | | | |
| 1 | (4,88g/m$^2$) 2,0 | 8.6 | 8,4 | 8,0 | 7,4 |
| 2 | 0,9 1,3 | 8,2 | 8,0 | 7,8 | 7,8 |
| 3 | 0,9 0,3 | 8.4 | 7,4 | 7,6 | 7,2 |
| 4 | 0,9 0,3 | 7,4 | 6,2 | 7,4 | 7,2 |
| Harnstoff | 0,9 5,7 | - | - | - | - |
| Rasenbilder | 0,9 0.7 | 7,4 | 6,8 | 7,0 | 7,1 |
| Vergleich | 0 0,2 | 1,0 | 1,8 | 1,0 | 1,8 |

*Faktor der normalen Aufbringungsrate (4,4g/m$^2$)

**Tabelle III**

Stickstoffwirkungsgrad im Vergleich zu herkömmlichem Material mit langsamer Wirkstofffreigabe

| | Anfangsreaktion Farbe (10 1) | | | Restreaktion Farbe (10 1) | | |
|---|---|---|---|---|---|---|
| Grasart | Blaugras | | | Blaugras | | |
| Bodenart | schlammiger Lehm | feinsandiger Lehm | | schlammiger Lehm | | feinsandiger Lehm |
| Testnummer | 2 | 3 | 4 | 2 | 3 | 4 |
| Ablesetag, Tag nach Aufbringung | 8 | 7 | 7 | 36 | 49 | 42 |
| N Rate | .7 | .7 | .75 | .7 | .7 | .75 |
| N Rate (Verringerung je Std.) | 22 % | 22 % | 17 % | 22 % | 22 % | 17 % |
| Formel | | | | | | |
| 1 | 7,8 | 8,4 | 8,3 | 7,6 | 7,6 | 10,0 |
| 2 | 7,6 | 7,0 | 7,7 | 7,2 | 6,8 | 9,3 |
| 3 | 7,6 | 7,2 | 8,7 | 7,6 | 7,0 | 10,0 |
| 4 | 7,2 | 6,8 | 7,0 | 6,6 | 7,0 | 8,7 |
| TB[1] | 7,4 | 6,8 | 7,7 | 7,0 | 7,1 | 9,7 |
| Vergleich[2] | 1,0 | 1,8 | 3,7 | 1,0 | 1,8 | 3,7 |

(1) Rasenbilder (der Standard für den Vergleich) wurde aufgebracht bei 4,4 g/m$^2$
(2) Vergleich ohne Düngerzusatz

Die Tabellen II und III zeigen, daß durch die Verwendung von Harnstoff-Formaldehyd-Reaktionsprodukten, die die kritischen hohen Anteile an MDU und DMTU enthalten, die Stickstoffwirksamkeit entscheident erhöht werden konnte. Dies führt wiederum zu verringerten Aufbringmengen, die zur Erreichung entsprechender Leistung erforderlich sind oder dazu, daß bei gleichen Aufbringmengen man eine höhere Leistung erreicht gegenüber den herkömmlichen Stickstoffquellen mit langsamer Wirkstofffreigabe.

Die Erfindung basiert zum Teil auf der Feststellung, daß kurzkettige Polymere wie MDU und DMTU ein wesentlich größeren ackerbaulichen Wirkungsgrad besitzen als die höheren Methylen-Harnstoff-Polymere, jedoch gleichzeitig deren Unschädlichkeit und langsame Wirkstofffreigabe besitzen. Theoretisch wäre es wünschenswert, wenn es vom wirtschaftlichen Standpunkt aus leicht ginge, ein Düngemittel herzustellen, daß nur kurzkettige Polymere enthält. Das folgende Beispiel soll diesen Schluß verdeutlichen.

**Beispiel 7**

Dieses Beispiel zeigt den Stickstoffwirkungsgrad, die Unbedenklichkeit und die langsame Wirkstofffreigabe von kurzkettigen Methylen-Harnstoffen in ihren reinem Zustand.

Chemisch reiner Methylen-Diharnstoff (MDU) und Dimethylentriharnstoff (DMTU) wurden unter Verwendung von präparativer Flüssigchromatographie hergestellt. Eine konzentrierte wässrige Lösung einer Mischung von Methylen-Harnstoff wurde auf eine Flüssigchromatographiesäule mit Wasser als mobile Phase (200 bis 500 ml/Minute) aufgebracht. Die einzelnen Methylen-Harnstoffe wurden nach der Bestimmung mittels Refraktionsindex gesammelt. Das Wasser wurde durch Verdampfen aus den gesammelten Fraktionen entfernt und der Reinheitsgrad durch analytische Hochdruck-Flüssigchromatographie, Molekulargewichtsbestimmungen und Elementaranalyse bestimmt.

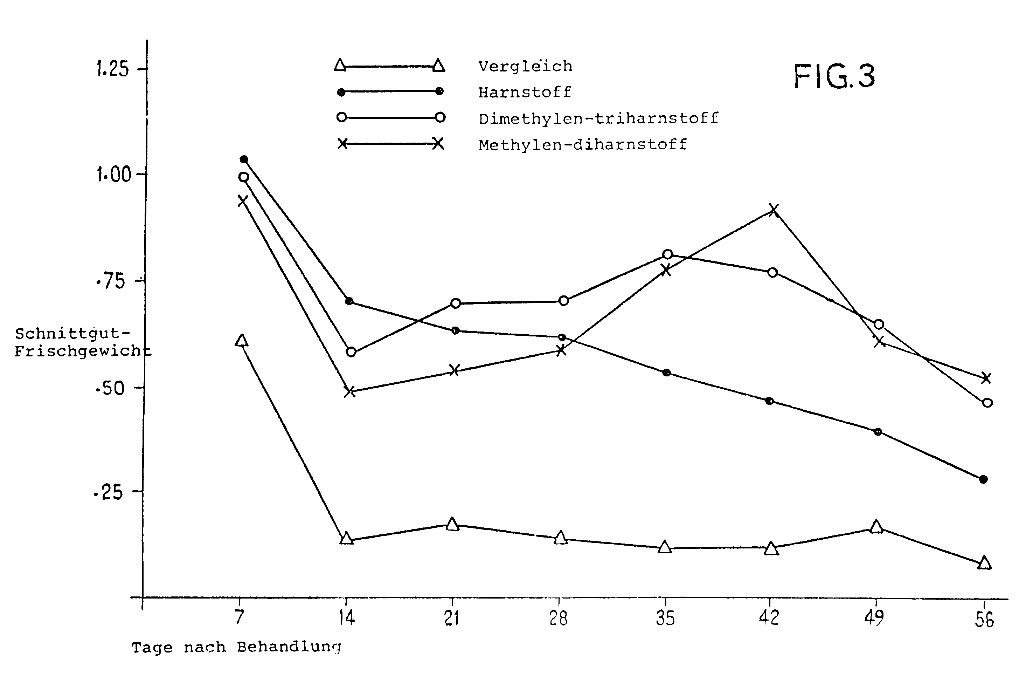

Diese Ansätze wurden in einer Menge von 24,4 g/m$^2$ auf Kentucky Blaugras aufgebracht. Fig. 3 zeigt das Frischgewicht des geschnittenen Blaugrases, daß in seinem Wachstum durch Harnstoff und die Methylen-Harnstoff-Polymere beeinflußt ist. Wie man sieht, haben Harnstoff, Methylen-Diharnstoff und Dimethylen-triharnstoff ein vergleichbares Wachstum während der ersten 28 Tage der Untersuchung hervorgerufen. Am 35. Tag jedoch treten die Eigenschaften MDU und DMTU im Vergleich zu Harnstoff zutage und hatten bis zum 56. Tag an. Diese Unterschiede treten statisch während des gesamten Zeitraums besonders bei einer Menge von 5 % hervor.

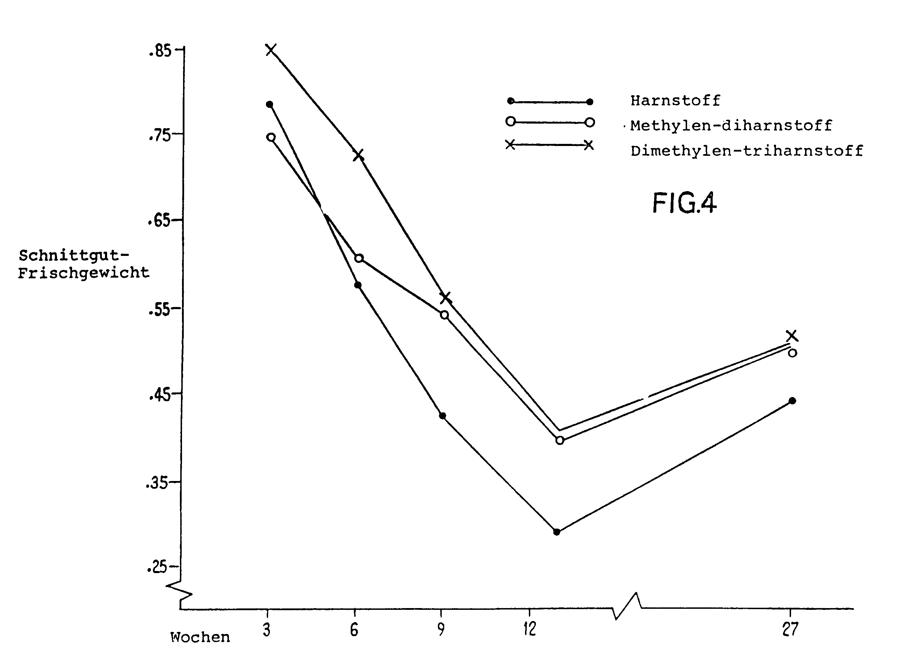

In Fig. 4 werden die Frischgewicht des Schnittgutes verglichen, wobei über einen Zeitraum von drei Wochen eine durchschnittliche Ausbeute Verwendung fand. Legt man die Daten zusammen, unabhängig von den Mengen (9,76, 24,5 und 39/m$^2$) so verringert sich die Anwendungsmöglichkeit, die aufgrund des Umwetteinflusses auftritt, und man erhält ein genaueres Bild der Ergebnisse. Fig. 4 zeigt Merkmale von MDU und DMTU im Rahmen einer 27 wöchigen Untersuchung. DMTU war deutlich besser als Harnstoff bei allen Daten, ausgenommen während der ersten drei Wochen. MDU war ähnlich dem Harnstoff während der ersten sechs Wochen, dann deutlich besser für den Rest Testzeit. MDU und DMTU zeigen beide bessere Resteigenschäften als Harnstoff.

Die Tabelle IV zeigt die Unschädlichkeit von kurzkettigen Methylen-Harnstoff-Polymeren. Harnstoff, MDU und DMTU und Dimethylol-Harnstoff wurden in einer Menge von 39 g/m$^2$ auf feuchtes Kentucky-Blaugras aufgebracht. Dimethylol-Harnstoff ist eine der Reaktionszwischenprodukte bei der Methylen-Harnstoff-Polymerisation. Weder MDU noch DMTU erzeugten irgendeine merkliche Beschädigung, wohingegen Harnstoff und Dimethylol-Harnstoff dies sehr wohl taten.

Tabelle IV

| Toleranz von Kentucky Blaugras gegenüber Harnstoff-Methylen-Harnstoff und Dimethylol-Harnstoff | | | | | |
|---|---|---|---|---|---|
| Stickstoffquelle | gN/m2 | % Beschädigung Tage nach der Behandlung | | | |
| | | 3 | 7 | 21 | 28 |
| Methylen-diharnstoff | 39,1 | 0 | 1,7 | 0 | 0 |
| Dimethylen-triharnstoff | 39,1 | 1 | 0 | 0 | 0 |
| Harnstoff | 39,1 | 26,7 | 25,0 | 23,0 | 14,0 |
| Dimethylol-Harnstoff | 39,1 | 30,0 | 65,0 | 58,0 | 57,0 |
| Vergleich | 0 | 0 | 0 | 0 | 0 |

Die Erfindung wurde anhand spezieller Beispiele von Düngemitteln erläutert. Viele andere Pflanzennährstoffe, insbesondere Spurenelemente, und Chemikalien wie Herbizide, Fungizide und Insektizide können mit den Produkten nach der Erfindung kombiniert werden. Beispiele für andere Zusätze sind in den beiden zuletzt genannten US-Patentschriften zu finden. Weitere Pestizide, Herbizide und andere Zusätze können den entsprechenden Fachbüchern entnommen werden.

**Patentansprüche**

1. Granuliertes Düngemittel mit gesteuerter Wirkstofffreigabe, umfassend das Reaktionsprodukt, hergestellt aus einem Reaktionsgemisch aus einem Überschuß aus Harnstoff mit Formaldehyd, wobei das genannte Reaktionsprodukt, als Teil des Gesamtgehaltes an Stickstoff, polymer gebundenen Stickstoff in der Form von Methylen-Harnstoff-Polymeren unterschiedlicher Kettenlängen enthält, wobei das genannte granulierte Düngemittel in einer trockenen granulierten Form vorliegt, wobei der Gesamtgehalt des Formaldehyds in dem genannten Reaktionsgemisch vollständig mit dem genannten Harnstoff kondensiert ist, und wenigstens 60 Gew.-% des polymer gebundenen Stickstoffs des genannten granulierten Düngemittels in der Form von in kaltem Wasser löslichen Stickstoffpolymeren vorliegt, wobei die genannten, in kaltem Wasser löslichen Stickstoffpolymere Methylen-Diharnstoff oder Mischungen desselben mit Dimethylen-Triharnstoff sind, wobei der durchschnittliche Polymerisationsgrad von Harnstoff und Formaldehyd größer als 1,5 ist.

2. Düngemittel nach Anspruch 1 mit einem Harnstoffgehalt von bis zu 70 Gew.-%.

3. Düngemittel nach Anspruch 1, wobei wenigstens 45 Gew.-% des gesamten Stickstoffgehalts aus in kaltem Wasser löslichen Reaktionsprodukten besteht, wenn die Menge an in kaltem Wasser unlöslichem Stickstoff 15 bis 35 Gew.-% der Gesamtmenge beträgt, und wobei mehr als 35 Gew.-% des Gesamtgehaltes an Stickstoff aus in kaltem Wasser löslichen Reaktionsprodukten besteht, wenn der Prozentanteil an in kaltem Wasser unlöslichem Stickstoff unter 15 Gew.-% liegt.

4. Düngemittel nach Anspruch 3, wobei weniger als 20 Gew.-% des genannten Stickstoffs aus in kaltem Wasser unlöslichen Methylen-Harnstoffpolymeren besteht.

5. Düngemittel nach einem der Ansprüche 1 bis 4, das einen inerten Träger aufweist.

6. Düngemittel nach Anspruch 5, wobei der Träger porös und das Düngemittel in den Poren enthalten ist.

7. Düngemittel nach Anspruch 6, wobei der poröse Träger Vermikulit ist.

8. Düngemittel nach einem der Ansprüche 1 bis 7, das zusätzliche Pflanzennährstoffe aufweist.

9. Düngemittel nach Anspruch 8, das Phosphor und Kalium enthält.

10. Düngemittel nach einem der Ansprüche 1 bis 9, dem Pestizide und Fungizide zugesetzt sind.

Claims

1. A controlled release granulated fertilizer containing the reaction product produced from a reaction mixture made from an excess of urea with formaldehyde, wherein the said reaction product, being part of the entire content of nitrogen, polymer combined nitrogen in the form of methylene urea polymers contains different lengths of chain, wherein the said granulated fertilizer is present in a dry granulated form, wherein the entire content of the formaldehyde in the said reaction compound is condensed fully with the said urea, and at least 60 percentage weight of the polymer combined nitrogen of the said granulated fertilizer is present in the form of cold water-soluble nitrogen polymers, wherein the said cold water-soluble nitrogen polymers are methylene diurea or mixtures thereof with dimethylene triurea, wherein the average level of polymerisation of urea and formaldehyde is greater than 1.5.

2. A fertilizer according to claim 1 having a urea content of up to 70 % by weight.

3. A fertilizer according to claim 1, wherein at least 45 % by weight of the entire nitrogen content consists of cold water-soluble reaction products, if the quantity of cold water-non-soluble nitrogen amounts to 15 to 35 % by weight and wherein more than 35 % by weight of the entire content of nitrogen consists of cold water-soluble reaction products, if the proportion of cold water-non-soluble nitrogen is below 15 % by weight.

4. A fertilizer according to claim 3, wherein less than 20 % by weight of the said nitrogen consists of cold water-non-soluble methylene urea polymers.

5. A fertilizer according to any one of claims 1 to 4, which contains an inert carrier.

6. A fertilizer according to claim 5, wherein the carrier is porous and the fertilizer is contained in the pores.

7. A fertilizer according to claim 6, wherein the porous carrier is vermiculite.

8. A fertilizer according to any one of claims 1 to 7 which contains additional plant nutrients.

9. A fertilizer according to claim 8 which contains phosphorus and potassium.

10. A fertilizer according to any one of claims 1 to 9 to which have been added pesticides and fungicides.

Revendications

1. Engrais granulé à libération ou solubilisation régularisée de la ou des substances actives, cet engrais comprenant le produit de réaction préparé à partir d'un mélange réactionnel formé d'un excès d'urée avec du formaldéhyde, ce produit de réaction, constituant une partie de la teneur totale en azote, contenant de l'azote fixé dans un polymère sous forme de polymères de méthylène-urée ayant différentes longueurs de chaîne, l'engrais granulé cité étant présent sous une forme granulée sèche, la totalité du formaldéhyde contenu dans le mélange réactionnel cité étant entièrement condensée avec l'urée citée, et au moins 60 % du poids de l'azote fixé dans la polymère et faisant partie de l'engrais granulé cité étant présents sous forme de polymères d'azote solubles dans l'eau froide, les polymères d'azote cités, solubles dans l'eau froide, étant de la méthylènediurée ou des mélanges de ce composé avec de la diméthylènetriurée, le degré moyen de polymérisation de l'urée et du formaldéhyde étant supérieur à 1,5.

2. Engrais selon la revendication 1, ayant une teneur en azote allant jusqu'à 70 % en poids.

3. Engrais selon la revendication 1, dans lequel au moins 45 % en poids de la teneur totale en azote consistent en des produits de réaction solubles dans l'eau froide lorsque la quantité de l'azote insoluble dans l'eau froide représente entre 15 et 35 % en poids de la quantité totale, et plus de 35 % en poids de la teneur totale en azote consistent en des produits de réaction solubles dans l'eau froide lorsque le pourcentage de l'azote insoluble dans l'eau froide est inférieur à 15 % en poids.

4. Engrais selon la revendication 3, dans lequel moins de 20 % du poids de l'azote consistent en des polymères de méthylène-urée insolubles dans de l'eau froide.

5. Engrais selon l'une des revendications 1 à 4, qui présente un support inerte.

6. Engrais selon la revendication 5, dans lequel le support est poreux et l'engrais est contenu dans les pores.

7. Engrais selon la revendication 6, dans lequel le support poreux est de la vermiculite.

8. Engrais selon l'une des revendications 1 à 7, qui comporte en outre des matières nutritives pour les plantes.

9. Engrais selon la revendication 8, qui contient du phosphore et du potassium.

10. Engrais selon l'une des revendications 1 à 9, qui est additionné de pesticides ou de fongicides.

FIG.1

FIG.2

**FIG.3**

Legend:
- △——△ Vergleich
- ●——● Harnstoff
- ○——○ Dimethylen-triharnstoff
- ✕——✕ Methylen-diharnstoff

Y-axis: Schnittgut-Frischgewicht (1.25, 1.00, .75, .50, .25)

X-axis: Tage nach Behandlung (7, 14, 21, 28, 35, 42, 49, 56)

EP 0 071 128 B2

FIG.4